# EUROPÄISCHE PATENTANMELDUNG

(11) **EP 2 418 760 A2**
(43) Veröffentlichungstag der Anmeldung: **15.02.2012**
(21) Anmeldenummer: 11170883.0
(22) Anmeldetag: 22.06.2011
(51) Int. Cl.: H02K 11/00, H02K 7/116

(54) **Stellantriebssystem zum Aufbau eines Stellantriebs, insbesondere zur Verwendung in einem Kraftfahrzeug**

(30) Priorität: 13.08.2010 DE 102010039305
(71) Anmelder: Robert Bosch GmbH, 70442 Stuttgart (DE)
(72) Erfinder: Lauk, Detlef, 77871 Renchen (DE)

(57) **Zusammenfassung**

Die Erfindung betrifft Stellantriebssystem zum Bereitstellen eines Stellantriebs (1) für automobile Anwendungen, insbesondere für ein Fensterhebersystem, umfassend:
- einen Antriebsmotor (2);
- ein Getriebe (3), das mit dem Antriebsmotor (2) gekoppelt ist;
- ein erstes Elektronikgehäuse (5) zur Aufnahme einer ersten Leiterplatte (6), die eine erste Gruppe von Funktionen implementiert;
- ein zweites Elektronikgehäuse (10) zur Aufnahme einer zweiten Leiterplatte (9), die eine zweite Gruppe von Funktionen implementiert, die die erste Gruppe von Funktionen umfasst;
wobei das erste und das zweite Elektronikgehäuse (5, 10) jeweils in identischer Weise an dem Stellantrieb (2) anbringbar sind, um bedarfsabhängig entweder das erste oder das zweite Elektronikgehäuse (5, 10) an dem Stellantrieb (1) vorzusehen.

## Beschreibung

### Technisches Gebiet

Die vorliegende Erfindung betrifft Stellantriebe, insbesondere Stellantriebe mit einem Elektromotor und einem daran angeordneten Leiterplattengehäuse.

### Stand der Technik

Im Kraftfahrzeug ist eine Vielzahl von elektromotorischen Stellantrieben eingesetzt. Beispielsweise finden Stellantriebe in automatischen Fensterhebern, automatischen Schiebedächern, Sitzverstelleinrichtungen und dergleichen Anwendung. Den dort eingesetzten Stellantrieben ist gemein, dass sie in der Regel lediglich im Ein-/Aus-Betrieb betreibbar sind. Dies kann durch die hohe Anlaufkraft zu Schlägen in der Mechanik und somit zu einem höheren Verschleiß führen. Auch entsteht dadurch eine höhere Geräuschentwicklung, die bei derartigen Antriebseinheiten nicht vermeidbar ist.

Der Einsatz einer abgestuften bzw. variablen Ansteuerung eines Antriebsmotors ist allgemein bekannt. Mithilfe einer Pulsweitenmodulation können entsprechend den erforderlichen Betriebszuständen unterschiedliche effektive Versorgungsspannungen am Antriebsmotor dargestellt werden. Auf diese Weise lassen sich Drehzahl und Moment des Motors gezielt einstellen bzw. regeln und auf den jeweils geforderten Arbeitspunkt optimieren.

Beispielsweise ist aus der Druckschrift DE 43 04 960 A1 ein Verfahren zur Drehzahlsteuerung eines Motors mithilfe einer Pulsweitenmodulation bekannt. Dort wird zur Erzielung eines Sanftstarts und/oder Sanftstopps des Motors das Tastverhältnis variiert, wobei die Pulsweitenmodulation des Steuersignals zeit-und/oder wegabhängig unter Verwendung eines Inkrementalgebers erfolgt.

Herkömmliche Stellantriebe, die nur den Ein-/Aus-Betrieb vorsehen, können in der Regel nicht ohne Weiteres zusätzlich mit einer Pulsweitenmodulation ausgestattet werden. Da bei Fahrzeugherstellern nur bestimmte Baureihen eine derartige Zusatzfunktionalität benötigen, ist es in der Regel notwendig, den Stellantrieb erneut zu designen, um den zusätzlichen Bauraum zum Vorsehen der PWM-Funktionalität bereitzustellen. Insbesondere bei Fensterheberantrieben steht der Stellantrieb über ein Seilsystem mit der zu bewegenden Fensterscheibe in Verbindung. Beim Anlauf kann es somit zu einem schnellen Spannen von zuvor losen Seilen kommen, wodurch eine starke Geräuschentwicklung entsteht.

Es ist daher Aufgabe der vorliegenden Erfindung, ein Stellantriebssystem zum Bereitstellen eines Stellantriebs, insbesondere für ein Fensterhebersystem, zur Verfügung zu stellen, bei dem zum einen negative Wirkungen, wie z.B. eine Geräuschentwicklung beim Anlauf des Stellantriebs, reduziert sind und wobei zum anderen der zusätzliche Konstruktionsaufwand zum Vorsehen von Stellantrieben mit und ohne die Implementierung einer solchen Funktionalität reduziert werden kann.

### Offenbarung der Erfindung

Diese Aufgabe wird durch das Stellantriebssystem gemäß Anspruch 1 sowie durch den Stellantrieb und die Verwendung des Stellantriebs für ein Fensterhebersystem gemäß den nebengeordneten Ansprüchen gelöst.

Weitere vorteilhafte Ausgestaltungen sind in den abhängigen Ansprüchen angegeben.

Gemäß einem ersten Aspekt ist ein Stellantriebssystem zum Bereitstellen eines Stellantriebs für automobile Anwendungen, insbesondere für ein Fensterhebersystem, vorgesehen, umfassend:
- einen Antriebsmotor,
- ein Getriebe, das mit dem Antriebsmotor gekoppelt ist,
- ein erstes Elektronikgehäuse zur Aufnahme einer ersten Leiterplatte, die eine erste Gruppe von Funktionen implementiert;
- ein zweites Elektronikgehäuse zur Aufnahme einer zweiten Leiterplatte, die eine zweite Gruppe von Funktionen implementiert, die die erste Gruppe von Funktionen umfasst;
   wobei das erste und das zweite Elektronikgehäuse jeweils in identischer Weise an dem Stellantrieb anbringbar sind, um bedarfsabhängig entweder das erste oder das zweite Elektronikgehäuse an dem Stellantrieb vorzusehen.

Eine Idee des obigen Stellantriebssystems besteht darin, ein modulares System zum Aufbau eines Stellantriebs vorzusehen, bei dem je nach Anforderung das erste oder das zweite Elektronikgehäuse vorgesehen werden kann. Die Elektronikgehäuse weisen unterschiedliche Bauräume auf, die durch eine entsprechende Leiterplatte ausgefüllt werden. Die Leiterplatte für das zweite Elektronikgehäuse kann größer sein als die Leiterplatte für das erste Elektronikgehäuse, so dass zusätzliche Funktionen, wie z.B. eine Ansteuerung mit einer Pulsweitenmodulation, vorgesehen werden können, ohne dass eine erhebliche konstruktive Änderung des Stellantriebs notwendig wird.

Weiterhin kann das zweite Elektronikgehäuse durch Aufsetzen eines Ansatzteils auf das erste Elektronikgehäuse gebildet sein.

Gemäß einer Ausführungsform kann vorgesehen sein, dass nur die zweite Gruppe von Funktionen eine Funktion zum Ansteuern des Antriebsmotors gemäß einem Pulsweitenmodulationsverfahren umfasst.

Insbesondere kann die zweite Gruppe von Funktionen eine Funktion zum Ansteuern des Stellantriebs umfassen, bei der ein durch den Stellantrieb betriebenes Stellelement einer Schließvorrichtung in einem ersten Verstellbereich mit einer ersten Verstellgeschwindigkeit und in einem zweiten Verstellbereich mit einer zweiten Verstellgeschwindigkeit angesteuert wird.

Der zweite Verstellbereich der Funktion zum Ansteuern des Stellantriebs der Schließvorrichtung kann einem Bereich entsprechen, in dem das Stellelement in eine Dichtung an einer Schließposition verfährt.

Gemäß einer weiteren Ausführungsform kann die erste Gruppe von Funktionen mindestens eine der folgenden Funktionen umfassen:
- eine Einklemmschutzfunktion zum Vermeiden eines Einklemmens in einer mit dem Stellantrieb betriebenen Schließvorrichtung;
- eine Überstromschutzfunktion zum Abschalten des Antriebsmotors bei Überschreiten einer Stromschwelle durch den Motorstrom.

Die zweite Gruppe von Funktionen kann weiterhin mindestens eine der folgenden Funktionen umfassen:
- eine Funktion für einen Sanftanlauf eines mit dem Stellantrieb gekoppelten Stellelements;
- eine Funktion zum Einfahren des Stellelements in eine Dichtung während eines Schließvorgangs einer mit dem Stellantrieb betriebenen Schließvorrichtung.

Gemäß einem weiteren Aspekt ist ein Stellantrieb vorgesehen, der aus dem obigen Stellantriebssystem gebildet ist, bei dem das zweite Elektronikgehäuse verwendet wird.

### Kurzbeschreibung der Zeichnungen

Ausführungsformen der vorliegenden Erfindung werden nachfolgend anhand der beigefügten Zeichnungen näher erläutert. Es zeigen:
- Figur 1: eine Draufsicht auf einen Stellantrieb mit einem Elektronikgehäuse einer ersten Größe; und
- Figur 2: eine Draufsicht auf einen Stellantrieb mit einem Elektronikgehäuse einer zweiten Größe zur Aufnahme erweiterter Funktionalitäten.

### Beschreibung von Ausführungsformen

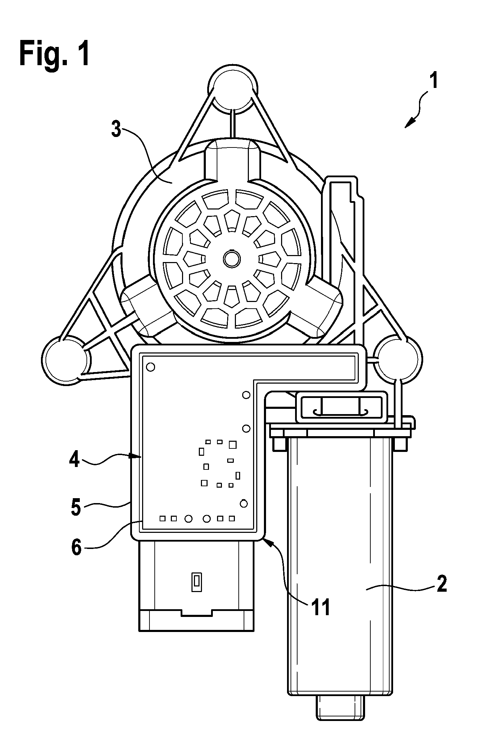

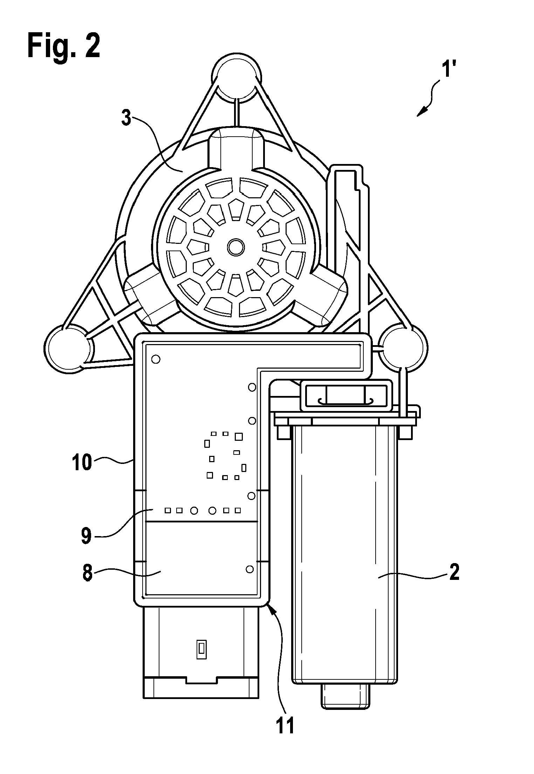

Die Figuren 1 und 2 zeigen Stellantriebe, die mit dem Stellantriebssystem bereitgestellt werden können und sich lediglich in der Wahl des Elektronikgehäuses unterscheiden.

In Figur 1 ist eine Draufsicht auf einen ersten Stellantrieb 1 zum Einsatz für ein Fensterhebersystem dargestellt. Der erste Stellantrieb 1 umfasst einen Antriebsmotor 2, der über ein Getriebe 3 mit einer Fensterhebermechanik (nicht gezeigt) verbunden ist, um eine Fensterscheibe als Stellelement entsprechend einem Benutzerwunsch zu bewegen.

Der Antriebsmotor 2 ist vorzugsweise ein bürstenkommutierter Gleichstrommotor, an den zum Betrieb eine Versorgungsspannung anlegbar ist, wobei die Polung der Versorgungsspannung eine Drehrichtung des Gleichstrommotors vorgibt.

Zur Ansteuerung des Antriebsmotors 2 ist eine Elektronikeinheit 4 vorgesehen, die in einem ersten Elektronikgehäuse 5 angeordnet werden kann. Die Elektronikeinheit 4 ist mit einer Leiterplatte 6 aufgebaut. Die Leiterplatte 6 weist eine Form auf, die einer Innenausnehmung des ersten Elektronikgehäuses 5 entspricht. Die Elektronikeinheit 4 auf der Leiterplatte 6 stellt die grundlegenden Funktionen zur Ansteuerung des Elektromotors 2 zu Verfügung.

Die auf der Leiterplatte 6 implementierten Funktionen können beispielsweise eine Einklemmschutzfunktion für das Fensterhebersystem, eine Motorstromüberwachungsfunktion und Funktionen zum Steuern bzw. Regeln eines ordnungsgemäßen Betriebs für das Einfahren der Fensterscheibe in einen Anschlag umfassen.

An das erste Elektronikgehäuse 5 schließt sich ein Steckverbinder 7 an, über den elektrische Energie und Ansteuersignale zur Vorgabe des Verhaltens des Stellantriebs 1 an die Leiterplatte 6 übermittelt werden können. Der Steckverbinder 7 ist von dem ersten Elektronikgehäuse 5 lösbar ausgebildet. Dazu ist eine an sich bekannte Verbindungseinrichtung 11 vorgesehen, mit der der Steckverbinder 7 an dem ersten Elektronikgehäuse 5 durch ein lösbares Verrasten befestigbar ist.

In Figur 2 ist ein zweiter Stellantrieb 1' gezeigt, bei dem das erste Elektronikgehäuse 5 um ein Erweiterungsmodul 8 (Ansatzteil) erweitert ist, um ein zweites Elektronikgehäuse 10 zu bilden. Das Erweiterungsmodul 8 weist eine der Verbindungseinrichtung 11 entsprechende Verbindungseinrichtung auf, so dass dieses mit dem ersten Elektronikgehäuse 5 koppelbar ist. Weiterhin trägt das Erweiterungsmodul 8 an dem der Verbindungseinrichtung gegenüber liegenden Ende einen weiteren Steckverbinder 12, der zu dem Steckverbinder 7 identisch ist. Durch das Erweiterungsmodul 8 wird das erste Elektronikgehäuse 5 vergrößert, so dass ein zweites Elektronikgehäuse 10 erhalten wird. In das zweite Elektronikgehäuse 10 kann eine vergrößerte Leiterplatte 9 eingesetzt werden.

Das erste und das zweite Elektronikgehäuse 5, 10 sind mit dem Stellantrieb 1, insbesondere an dem Getriebe 3, befestigt. Alternativ kann das zweite Elektronikgehäuse 10 als separates Gehäuse nicht basierend auf dem ersten Elektronikgehäuse 5 ausgebildet sein.

Das erweiterte Elektronikgehäuse 5 kann also eine Leiterplatte aufnehmen, die erweiterte Funktionen zum Betreiben des Elektromotors 2 umfasst. Diese erweiterten Funktionen können auf einer Pulsweitenmodulation basieren, die geeignet ist, den Antriebsmotor 2 variabel anzusteuern, um zusätzliche Funktionen zu realisieren.

Unter einer Pulsweitenmodulation versteht man die zyklische Ansteuerung eines Elektromotors durch Anlegen einer Versorgungsspannung in einem ersten Zeitfenster und Abschalten der Versorgungsspannung in einem zweiten Zeitfenster, wobei die gesamte Zeitdauer des ersten und des zweiten Zeitfensters der Gesamtperiodendauer der zyklischen Ansteuerung gemäß dem Pulsweitenmodulationsverfahren entspricht. Das Verhältnis der Zeitdauer des ersten Zeitfensters zur gesamten Periodendauer entspricht dem Tastverhältnis.

Durch die variable Ansteuerung des Antriebsmotors 2 ist es möglich, einen Sanftanlauf oder einen Sanftauslauf der Fensterscheibe zu realisieren, so dass insbesondere bei einem Fensterhebersystem, bei dem der Stellantrieb über einen Seilzug mit der Fensterscheibe verbunden ist, Schlaggeräusche durch einen abrupten Start des Antriebsmotors 2 vermieden werden können.

Durch die hochfrequente Taktung der Versorgungsspannung bei Anwendung einer Pulsweitenmodulation können entsprechend den erforderlichen Betriebszuständen unterschiedliche effektive Versorgungsspannungen am Elektromotor 2 dargestellt werden. Auf diese Weise lassen sich Drehzahl und Antriebsmoment des Antriebsmotors 2 gezielt einstellen bzw. regeln und auf den jeweils geforderten Arbeitspunkt optimieren.

Mithilfe der Pulsweitenmodulation kann die Drehgeschwindigkeit des Elektromotors 2 konstant eingestellt werden, unabhängig von den zu überwindenden Widerständen beim Bewegen der Fensterscheibe. Dadurch ergeben sich weitere Geräuschvorteile, da sich die Bewegung der Fensterscheibe gleichmäßiger vollzieht. Die Drehgeschwindigkeit wird dabei mithilfe einer Drehzahlregelung konstant eingestellt. Die Drehgeschwindigkeit des Antriebmotors 2 kann dazu über einen Sensor erfasst werden. Alternativ kann die Drehgeschwindigkeit auch durch Auswertung der durch die Kommutierung des Gleichstrommotors entstehenden Stromrippel erhalten werden.

Ein derartiger Stellantrieb kann in einer Schließvorrichtung, wie beispielsweise einem Fensterhebersystem, vorgesehen werden, wobei der Stellantrieb mit einem Stellelement, wie z.B. einer Fensterscheibe, gekoppelt ist, um dieses zum Schließen oder Öffnen zu verfahren. Es können bei Implementierung der Pulsweitenmodulation unterschiedliche Geschwindigkeiten beim Öffnen und Schließen der Fensterscheibe in dem Fensterhebersystem vorgesehen werden.

Darüber hinaus kann als erweiterte Funktionalität vorgesehen werden, dass der Antriebsmotor 2 für eine geringere Nennspannung ausgelegt ist, die über eine Pulsweitenmodulation mit einem reduzierten Tastverhältnis von weniger als 100%, beispielsweise 80%, realisiert werden kann. Das heißt das Öffnen und Schließen der Fensterscheibe wird durch Anlegen einer effektiven Versorgungsspannung vorgenommen, die durch das pulsweitenmodulierte Ansteuern des Antriebsmotors 2 mit dem reduzierten Tastverhältnis vorgenommen wird. Kurz vor dem Einfahren in das Dichtsystem, z.B. in einem Verstellbereich von ca. 1 bis 3 cm vor dem Anschlag in Schließstellung beim Schließen der Fensterscheibe, kann eine Zusatzleistung bereitgestellt werden, indem das Tastverhältnis über das reduzierte Tastverhältnis erhöht wird, beispielsweise auf 90 % oder 100%, und der Antriebsmotor entsprechend dem erhöhten Tastverhältnis angesteuert wird. Dadurch kann der erhöhte Widerstand der Fensterscheibe beim Einfahren in die Dichtung ausgeglichen werden, so dass sich die Bewegung der Fensterscheibe nicht verlangsamt.

## Patentansprüche

1. Stellantriebssystem zum Bereitstellen eines Stellantriebs (1) für automobile Anwendungen, insbesondere für ein Fensterhebersystem, umfassend:
- einen Antriebsmotor (2);
- ein Getriebe (3), das mit dem Antriebsmotor (2) gekoppelt ist;
- ein erstes Elektronikgehäuse (5) zur Aufnahme einer ersten Leiterplatte (6), die eine erste Gruppe von Funktionen implementiert;
- ein zweites Elektronikgehäuse (10) zur Aufnahme einer zweiten Leiterplatte (9), die eine zweite Gruppe von Funktionen implementiert, die die erste Gruppe von Funktionen umfasst;
wobei das erste und das zweite Elektronikgehäuse (5, 10) jeweils in identischer Weise an dem Stellantrieb (2) anbringbar sind, um bedarfsabhängig entweder das erste oder das zweite Elektronikgehäuse (5, 10) an dem Stellantrieb (1) vorzusehen.

2. Stellantriebssystem nach Anspruch 1, wobei das zweite Elektronikgehäuse (10) durch Aufsetzen eines Ansatzteils (8) auf das erste Elektronikgehäuse (5) gebildet ist.

3. Stellantriebssystem nach Anspruch 1 oder 2, wobei nur die zweite Gruppe von Funktionen eine Funktion zum Ansteuern des Antriebsmotors (2) gemäß einem Pulsweitenmodulationsverfahren umfasst.

4. Stellantriebssystem nach Anspruch 3, wobei die zweite Gruppe von Funktionen eine Funktion zum Ansteuern des Stellantriebs (2) umfasst, bei der ein durch den Stellantrieb (1) betriebenes Stellelement einer Schließvorrichtung in einem ersten Verstellbereich zum Einstellen einer ersten Verstellgeschwindigkeit und in einem zweiten Verstellbereich zum Einstellen einer zweiten Verstellgeschwindigkeit angesteuert wird.

5. Stellantriebssystem nach Anspruch 4, wobei der zweite Verstellbereich der Funktion zum Ansteuern des Stellantriebs (1) der Schließvorrichtung einem Bereich entspricht, in dem das Stellelement in eine Dichtung an einer Schließposition verfährt.

6. Stellantriebssystem nach einem der Ansprüche 1 bis 5, wobei die erste Gruppe von Funktionen mindestens eine der folgenden Funktionen umfasst:
- eine Einklemmschutzfunktion zum Vermeiden eines Einklemmens in einer mit dem Stellantrieb (1) betriebenen Schließvorrichtung;
- eine Überstromschutzfunktion zum Abschalten des Antriebsmotors (2) bei Überschreiten einer Stromschwelle durch den Motorstrom.

7. Stellantriebssystem nach einem der Ansprüche 1 bis 6, wobei die zweite Gruppe von Funktionen weiterhin mindestens eine der folgenden Funktionen umfasst:
- eine Funktion für einen Sanftanlauf eines mit dem Stellantrieb (2) gekoppelten Stellelements;
- eine Funktion zum Einfahren des Stellelements in eine Dichtung während eines Schließvorgangs einer mit dem Stellantrieb betriebenen Schließvorrichtung.

8. Stellantrieb (1), gebildet aus dem Stellantriebssystem nach einem der Ansprüche 1 bis 7, bei dem das zweite Elektronikgehäuse (10) verwendet wird.

9. Verwendung des Stellantriebs (1) nach Anspruch 8 für ein Fensterhebersystem in einem Kraftfahrzeug.
